# EUROPÄISCHE PATENTSCHRIFT

(11) **EP 1 921 587 B1**
(45) Veröffentlichungstag und Bekanntmachung des Hinweises auf die Patenterteilung: **17.12.2008**
(21) Anmeldenummer: 07016526.1
(22) Anmeldetag: 23.08.2007
(51) Int. Cl.: G08B 29/14

(54) **Optoelektronische Überwachungsvorrichtung mit Testeinheit und Testverfahren**
Optoelectronic surveillance device with a test unit and test method
Dispositif optoélectronique de surveillance avec une unité de test et procédé de test

(30) Priorität: 09.11.2006 DE 102006052805
(43) Veröffentlichungstag der Anmeldung: 14.05.2008
(73) Patentinhaber: SICK AG, 79183 Waldkirch (DE)
(72) Erfinder: Braune, Ingolf, 79194 Gundelfingen (DE)
(74) Vertreter: Ludewigt, Christoph

(56) Entgegenhaltungen:
- EP-A2- 1 174 733
- US-B1- 6 674 404

## Beschreibung

Die Erfindung betrifft eine optoelektronische Überwachungsvorrichtung zur Objekterfassung sowie ein Testverfahren nach den Oberbegriffen von Anspruch 1 bzw. 8.

Optoelektronische Überwachungsvorrichtungen werden in einer Vielzahl von Anwendungen eingesetzt, die von der Diebstahlsicherung bis zur Absicherung gefährlicher Maschinen reichen, welche bei Annäherung eines Objekts und besonders von Bedienpersonal rechtzeitig automatisch abschalten müssen.

Eine Grundvoraussetzung für die Überwachung ist, dass die Sensoren, mit denen das Bild des Überwachungsbereichs aufgenommen wird, funktionsfähig sind. Dabei muss insbesondere unterschieden werden, ob die aktuelle Bildinformation noch den äußeren Verhältnissen entspricht oder ob sich ein Bild "eingebrannt" hat. Das ist nicht ohne weiteres feststellbar, da ein konstantes Bild sowohl Ausdruck einer unveränderten Szenerie als auch eine Fehlfunktion des Sensor sein kann.

Aus der DE 10017333 A1 ist eine Testeinheit für einen Bildsensor bekannt. Dabei wird das Objektbild dynamisiert, indem entweder der Bildsensor mechanisch gegen die Szenerie bewegt oder durch variierende Beleuchtung das aufgenommene Bild verändert wird. Nachteilig hieran ist, dass zum Testen auf die äußere Szenerie eingewirkt werden muss. Damit kann der Test nicht im Verborgenen durchgeführt werden. Mechanische Bewegung kann zwar im Sensor erfolgen, erfordert aber Zusatzaufwand.

Die DE 10205691 A1 offenbart einen Bildsensor, bei dem zu jedem Pixel ein erwartetes Rauschmaß mit einem tatsächlichen aktuellen Rauschmaß verglichen wird. Eine Abweichung wird als Fehlfunktion interpretiert. Dieses Verfahren ist relativ aufwändig, weil ein ja auch temperaturabhängiges Rauschmaß berechnet werden muss und allein aus einem erwarteten Rauschlevel noch nicht auf eine vollständige Funktionsfähigkeit geschlossen werden kann.

In der EP 0902402 A1 wird der Bildsensor zum Testen mittels einer LED geblendet. Damit lässt sich zwar ein Ansprechen der Pixel überprüfen, für den Test muss aber der laufende Betrieb immer wieder zyklisch unterbrochen werden.

Aus der EP 1 174 733 A2 ist ein optischer Sensor mit einem CMOS-Zeilenelement als Empfänger bekannt. Dieser Empfänger nimmt auftreffendes Licht während einer Belichtungszeit auf und erzeugt einen der auftreffenden Lichtmenge entsprechenden Signalwert. Ein Funktionstest des Sensors wird nicht angegeben.

Die US 6, 674, 404 B1 zeigt einen CMOS-Bildsensor, der die Funktionsfähigkeit seiner Pixelelemente in einem eigenen Testmodus testen kann. Es wird Licht innerhalb einer ersten Integrationszeit und einer längeren zweiten Integrationszeit aufgenommen und verglichen, ob der Intensitätsunterschied zumindest einem von einem Benutzer vorgegebenen kritischen Wert entspricht. Andernfalls wird der Pixel als defekt angesehen und sein gemessener Wert durch den Wert eines Nachbarpixels ersetzt.

Bei allen oben genannten Verfahren sind also zusätzliche technische Maßnahmen notwendig, die teilweise aufwändig sind, um den Sensor zu Testzwecken zu stimulieren.

Es ist daher Aufgabe der Erfindung, einen zuverässigen und einfarhen funktions test für einen bildsensor anzugeben.

Diese Aufgabe wird durch eine Überwachungsvorrichtung gemäß Anspruch 1 beziehungsweise ein Testverfahren gemäß Anspruch 7 gelöst. Die erfindungsgemäße Lösung kommt mit einem einfachen Aufbau ohne zusätzliche Bauteile wie etwa mechanischen Aktuatoren aus. Dabei kann ein für den Funktionstest ansonsten unveränderter Sensoraufbau ohne besondere Testeinrichtung verwendet werden, die nämlich in eine ohnehin vorhandene Steuerung integriert werden kann. Es sind keine separaten Testzyklen erforderlich, da der Test in den normalen Überwachungsablauf eingebunden werden kann, weil nur eine geringe, kompensierbare Variation der Abläufe erfolgt. Die Überwachungsaufgabe der Überwachungsvorrichtung kann also parallel zum Test wahrgenommen werden.

Die Erfindung hat also nicht Dynamisierung einzelner Bildpunkte zum Ziel, sondern einen Test des gesamten Sensors im normalen Auswertungsablauf ohne Anwendung zusätzlicher Testeinrichtungen. Der Test kann allein durch Variationen von Steuerungsparametern und den zugehörigen zeitlichen Abläufen erfolgen.

Bevorzugt ist die Testeinheit dafür ausgebildet, das Integrationszeitfenster zu verlängern oder zu verkürzen. Dies führt ganz unmittelbar zu einer Veränderung des Helligkeitssignals, ohne die äußere Szenerie zu verändern.

In einer weiteren Ausführungsform ist mindestens eine Lichtquelle vorgesehen, die dafür ausgebildet ist, Licht innerhalb eines Blitzzeitfensters auszusenden und weiterhin die Testeinheit dafür ausgebildet, das Blitzzeitfenster zu verschieben. Das Blitzzeitfenster verschiebt sich damit insbesondere gegen das Integrationszeitfenster und variiert das Helligkeitssignal. Alternativ kann das Integrationszeitfenster gegenüber dem Blitzzeitfenster verschoben werden.

Bevorzugt sind mehrere Lichtempfänger in Reihe oder flächig, insbesondere als Zeile oder Matrix, zusammengefasst und liefern somit ein Pixelbild. Derartige Lichtempfänger sind kostengünstig und leistungsfähig erhältlich und bieten die Voraussetzungen für eine gute Objekterfassung.

Noch bevorzugter ist der Lichtempfänger ein CCD- oder CMOS-Sensor. Dies sind gängige Sensortypen, die sich mit dem erfindungsgemäßen Test gut auf Funktionsfähigkeit überprüfen lassen.

Vorteilhafterweise ist die Steuerung dafür ausgebildet, bei Eindringen eines Objekts in einen überwachten Bereich ein Warn- oder Abschaltsignal auszugeben.

Das erfindungsgemäße Testverfahren wird mit ähnlichen Merkmalen fortgebildet, wie sie in den sich an das Testverfahren anschließenden Unteransprüchen angegeben sind, und zeigt dabei ähnliche Vorteile.

Die Erfindung wird nachstehend beispielhaft auch hinsichtlich weiterer Merkmale und Vorteile anhand von Ausführungsformen und unter Bezugnahme auf die beigefügte Zeichnung beschrieben. Die Figuren der Zeichnung zeigen in:
- Fig. 1: eine sehr vereinfachte schematische Übersichtsdarstellung einer Ausführungsform der erfindungsgemäßen Überwachungsvorrichtung;
- Fig. 2: eine Darstellung zur Erläuterung einer ersten Ausführungsform der Erfindung mit veränderter Länge des Integrationszeitfensters;
- Fig. 3: eine Darstellung zur Erläuterung eines Beispiels mit verschobenem Blitzzeitfenster; und
- Fig. 4: eine Darstellung zur Erläuterung einer zweiten Ausführungsform der Erfindung mit verschobenem Integrationszeitfenster.

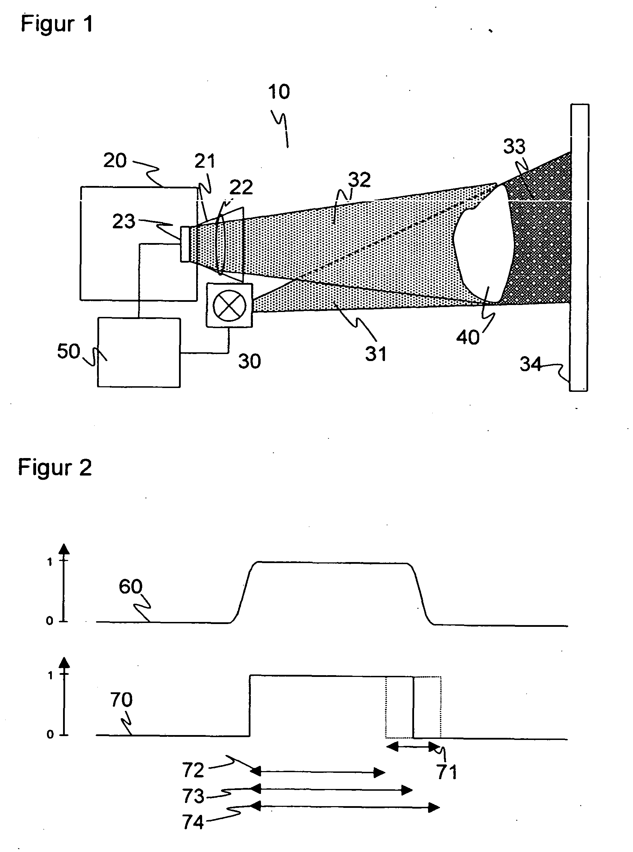

Figur 1 zeigt eine Übersichtsdarstellung einer erfindungsgemäßen Überwachungsvorrichtung 10. Eine Kamera 20 wertet das von einer Szenerie einfallende Licht aus. Die Kamera 20 ist der einfachen Darstellung halber nur mit einem Objektiv 21, das eine Linse 22 aufweist, sowie mit einem Lichtempfänger 23 dargestellt.

Der Lichtempfänger 23 ist ein lichtsammelnder Bildsensor nach der CCD-oder CMOS-Technologie. Die lichtempfindlichen Pixel des Lichtempfängers 23 sammeln das einfallende Licht und wandeln es in ein elektrisches Signal um, das somit eine Helligkeitsinformation trägt. Dabei ist das Integrationszeitfenster als diejenige Zeit definiert, in welcher die lichtempfindlichen Pixel eine der Lichtmenge proportionale Ladungsmenge akkumulieren (CCD-Ladungstöpfe, CMOS-Ladungsspeicher). Grundsätzlich genügt es, wenn der Bildsensor aus einem einzigen Pixel besteht. Eine genauere Bildauswertung lässt sich je nach Anwendung mittels einer Pixelzeile oder einer Pixelmatrix erhalten.

Eine Lichtquelle 30, beispielsweise eine LED oder ein Laser, sendet Licht 31 in die zu überwachende Szenerie. Diese Lichtquelle kann Licht im sichtbaren, aber auch beliebige andere Wellenlängen wie etwa des Infrarot- oder Ultraviolettbereichs aussenden. Ein Objekt 40 im Überwachungsbereich remittiert dieses Licht 32, das somit von der Kamera 20 erfasst wird. Eine Steuerung 50 kann nun anhand des von dem Lichtempfänger 23 empfangenen Lichts beispielsweise mittels einer Bildauswertung erkennen, das sich ein Objekt 40 im Überwachungsbereich befindet. Anstelle einer unmittelbaren Bildauswertung, die das Objekt 40 erkennen können müsste, ist auch denkbar, ein kooperatives Ziel 34 wie etwa ein Kontrastmuster in der Szenerie anzubringen. Die Steuerung 50 kennt in diesem Falle das ungestörte Ziel 34 und kann anhand der Abschattung 33 durch das Objekt 40 die Veränderung und somit den Eingriff durch das Objekt 40 erkennen. Bei Anwendung in der Sicherheitstechnik gibt die Steuerung nach Erkennung des Objekts 40 ein Warnsignal oder einen Abschaltbefehl an eine überwachte, für Bedienpersonal gefährliche Maschine aus. Selbstverständlich können Lichtquelle 30 und/oder Steuerung 50 abweichend von der Darstellung in die Kamera 20 integriert sein.

In dieser soeben beschriebenen Anordnung soll nun die Funktionsfähigkeit der Kamera 20 überprüft werden. Dies kann erfindungsgemäß auf verschiedene Arten erfolgen. Eine erste Ausführungsform ist in Figur 2 dargestellt. Im oberen Teil der Figur 2 ist der Intensitätsverlauf eines Beleuchtungspulses oder Blitzes 60 der Lichtquelle 30 und im unteren Teil die Öffnung 70 des Lichtempfängers 23 gegen die Zeit aufgetragen. Die Zeitspanne, in der der Blitz 60 von einem Intensitätswert Null verschieden ist, wird im folgenden als Blitzzeitfenster bezeichnet. Analog ist die Zeitspanne, in der der Lichtempfänger 23 geöffnet und somit die empfangene Lichtintensität ungleich Null ist, ein Integrationszeitfenster.

Die Ansteuerungen, welche das Blitzzeitfenster und das Integrationszeitfenster festlegen, sind bevorzugt rein elektronisch durch die Steuerung 50. Mechanische Blenden oder dergleichen wären aufwändig und in den meisten Fällen zu langsam.

Wie in Figur 2 durch einen Pfeil 71 angedeutet, wird zur Durchführung eines Funktionstests die Länge des Integrationszeitfensters variiert. Beispielhaft dargestellt sind drei Integrationszeitfenster 72, 73, 74. Statt des Endes des Integrationszeitfensters kann auch der Anfang verschoben werden. Der Lichtempfänger 23 kann nur in den Zeiten Licht akkumulieren, in denen der Blitz 60 auf den Lichtempfänger 23 remittiert wird. Um einen merklichen Effekt zu erhalten, muss deshalb die Variation des Integrationszeitfensters derart erfolgen, dass der weggelassene oder hinzugefügte Teil des Integrationszeitfensters auch in ein Zeitintervall fällt, in dem Licht des Blitzes 60 eine merkliche Veränderung der aufgefangenen Lichtmenge erzeugt.

Eine Verschiebung zwischen Blitz 60 und Öffnung 70 des Lichtempfängers durch die Lichtlaufzeit ist in Figur 2 wegen der unterschiedlichen Größenordnungen, die sich kaum bemerkbar machen würden, nicht dargestellt.

Die Variation der Länge des Integrationszeitfensters wirkt sich durch das längere oder kürzere Akkumulieren von einfallendem Licht als Verdunkelung oder Aufhellung des an die Steuerung 50 abgegebenen Helligkeitssignals aus. Wenn nun einige Pixel des Lichtempfängers 23 sich nicht verdunkeln oder aufhellen, so kann angenommen werden, dass sie defekt sind. Selbstverständlich sind auch differenziertere Tests vorstellbar, etwa ein wiederholter derartiger Fehler. In der Sicherheitstechnik würde man aber den Verdacht eines defekten Pixels gewöhnlich als Fehler genügen lassen und einen Abschaltbefehl erzeugen.

Gleichzeitig kennt aber Steuerung 50 den Erwartungswert der Verdunkelung oder Aufhellung, weil dieser proportional der Veränderung der Länge des Integrationszeitfensters ist. Somit kann die Steuerung 50 auch während des Tests das Objekt 40 erkennen.

Der Blitz 60 beleuchtet die Szenerie innerhalb eines Blitzzeitfensters in Anwendungen, bei denen eine externe Beleuchtung der Szenerie nicht ausreicht. Der Blitz 60 ist also nicht etwa Teil eines Funktionstests, sondern dient dem Überwachungsbetrieb. Der Funktionstest kann mit demselben Effekt auch ohne eine eigene Lichtquelle 30 erfolgen, sofern externe und nicht von der Überwachungsvorrichtung 10 beeinflussbare Lichtquellen zu Beleuchtung der Szenerie ausreichend sind.

Der Test des Lichtempfängers 23 erfolgt also durch eine Variation der Länge des Integrationszeitfensters. Hierdurch wird die Beleuchtungsstärke aller Bildelemente global variiert, ohne dass die Beleuchtung der Szenerie und damit das auf den Lichtempfänger 23 auftreffende Licht sich während des Tests von Licht außerhalb eines Tests unterscheidet.

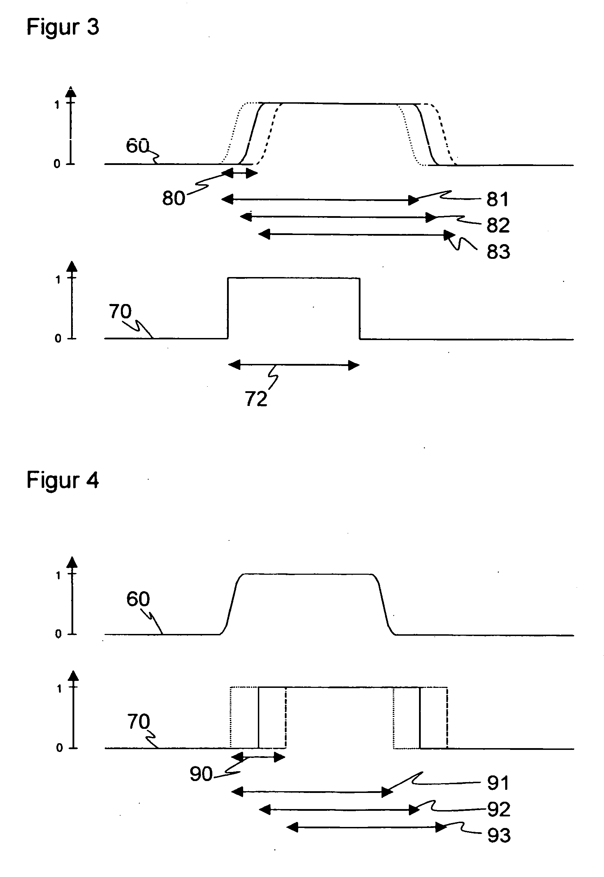

Anhand der Figur 3 wird ein Beispiel beschrieben. Dieses Beispiel geht ebenfalls von dem Grundprinzip aus, dasselbe remittierte Licht für Test und Betrieb zu verwenden. Hier und im folgenden bezeichnen daher gleiche Bezugsziffern gleiche Merkmale.

Im Gegensatz zu der ersten Ausführungsform wird nicht die Länge des Integrationszeitfensters verändert, sondern der zeitliche Ablauf der gesteuerten Lichtquelle 30 zum zeitlichen Ablauf des Integrationszeitfensters des Lichtempfängers 23 variiert. Die zeitliche Variation des Blitzes 60 soll durch den Verschiebungspfeil 80 angedeutet werden. Es entstehen somit für verschiedene Testparadigmen jeweils gleich lange, aber zeitlich verschobene Blitzzeitfenster 81, 82, 83. Das Integrationszeitfenster 72 bleibt in diesem Beispiel unverändert.

Bei diesem Beispiel muss die zeitliche Ansteuerung derart erfolgen, dass ein Rand des Integrationszeitfensters von zumindest einem der verschobenen Blitzzeitfenster 81-83 überstrichen wird. Nur dann nimmt der Lichtempfänger 23 während der Blitzzeitfenster 81 bis 83 unterschiedliche Lichtmengen auf und erzeugt somit ein unterschiedliches Helligkeitssignal, das für den Test ausgewertet werden kann.

Anhand der Figur 4 wird eine zweite Ausführungsform der Erfindung erläutert. Im Gegensatz zum Beispiel gemäß Figur 3 mit verschobenem Blitzzeitfenster wird hier das Integrationszeitfenster verschoben, wie durch einen Pfeil 90 angedeutet. Nicht die Länge wie bei der ersten Ausführungsform, sondern die zeitliche Abfolge von Blitz 60 zu Integrationszeitfenster 91-93 ist variiert. Damit wird ebenfalls eine unterschiedliche Helligkeit erreicht, ohne dass die Beleuchtung der Szenerie für diesen Test in irgendeiner Weise geändert werden muss.

Allen Ausführungsformen ist gemein, dass sich allein aufgrund von einfachen Manipulationen der zeitlichen Abläufe durch die Steuerung 50 der globale Helligkeitswert aller betroffenen Bildelemente verändern lässt. Diese Variation kann auf einfache und vorbestimmte Weise erfolgen. Da die Variation zugleich wohldefiniert und die bei funktionsfähigen Lichtempfängern 23 zu erwartende Veränderung der Ladungsmenge proportional zu der zeitlichen Veränderung ist, kann die Steuerung 50 sie zum einen für den Test verwenden, andererseits aber auch in einem weiteren Verarbeitungskanal kompensieren und somit den Betrieb fortsetzen.

Somit sind keine separaten Testzyklen erforderlich und der Test kann in den normalen Überwachungsablauf eingebunden werden. Die dargestellten Lösungen sind besonders in Fällen von Vorteil, in denen eine stationäre Referenzszene zur Verfügung steht. Die Erfindung ist aber auch in mobilen Anwendungen einsetzbar, besonders die Variation der Integrationszeit, also der Länge des Integrationszeitfensters, gemäß der ersten Ausführungsform.

Es soll noch betont werden, dass auch Mischformen der beschriebenen Ausführungsformen möglich sind. Es kann also beispielsweise für den Test sowohl der zeitliche Ablauf des Blitzes 60 oder des Integrationszeitfensters 70 als auch die Länge 72-74 des Integrationszeitfensters variiert werden.

## Patentansprüche

1. Optoelektronische Überwachungsvorrichtung (10) zur Objekterfassung mit mindestens einem Lichtempfänger (23), der dafür ausgebildet ist, Licht innerhalb eines Integrationszeitfensters zu empfangen und ein resultierendes Helligkeitssignal abzugeben,
wobei eine Steuerung (50) vorgesehen ist, die dafür ausgebildet ist, das Eindringen eines Objekts (40) in einen überwachten Bereich aus dem Signal des Lichtempfängers (23) zu erkennen
**dadurch gekennzeichnet,**
**dass** eine Testeinheit der Überwachungsvorrichtung (10) dafür ausgebildet ist, die Funktionsfähigkeit des Lichtempfängers (23) zu überprüfen, dass die Testeinheit für die Überprüfung der Funktionsfähigkeit weiterhin dafür ausgebildet ist, das Integrationszeitfenster zu variieren und eine Veränderung des Helligkeitssignals mit einer erwarteten Veränderung des Helligkeitssignals zu vergleichen, und dass die Steuerung (50) dafür ausgebildet ist, durch Variationen des Integrationszeitfensters verursachte Veränderungen des Helligkeitssignals zu kompensieren.

2. Überwachungsvorrichtung (10) nach Anspruch 1,
wobei die Testeinheit dafür ausgebildet ist, das Integrationszeitfenster zu verlängern oder zu verkürzen.

3. Überwachungsvorrichtung (10) Anspruch 1 oder 2,
wobei mindestens eine Lichtquelle (30) vorgesehen ist, die dafür ausgebildet ist, Licht innerhalb eines Blitzzeitfensters auszusenden
und wobei die Testeinheit dafür ausgebildet ist, das Blitzzeitfenster gegenüber dem Integrationszeitfenster oder das Integrationszeitfenster gegenüber dem Blitzzeitfenster zu verschieben.

4. Überwachungsvorrichtung (10) nach einem der vorhergehenden Ansprüche,
wobei mehrere Lichtempfänger (23) in Reihe oder flächig, insbesondere als Zeile oder Matrix, zusammengefasst sind und somit ein Pixelbild liefern.

5. Überwachungsvorrichtung (10) nach einem der vorhergehenden Ansprüche,
wobei der Lichtempfänger (23) ein CCD- oder CMOS-Sensor ist.

6. Überwachungsvorrichtung (10) nach einem der vorhergehenden Ansprüche,
wobei die Steuerung (50) dafür ausgebildet ist, bei Eindringen eines Objekts (40) in einen überwachten Bereich ein Warn- oder Abschaltsignal auszugeben.

7. Testverfahren für eine optoelektronische Überwachungsvorrichtung (10) mit mindestens einem Lichtempfänger (23), der Licht innerhalb eines Integrationszeitfensters empfängt und ein resultierendes Helligkeitssignal abgibt,
wobei aus dem Signal des Lichtempfängers (23) das Eindringen eines Objekts (40) in einen überwachten Bereich erkannt wird,
**dadurch gekennzeichnet, dass**
die Funktionsfähigkeit des Lichtempfängers (23) getestet wird, dass das Integrationszeitfenster variiert und eine Veränderung des Helligkeitssignals mit einer erwarteten Veränderung des Helligkeitssignals verglichen wird und
dass die während des Testens der Funktionsfähigkeit durch Variationen des Integrationszeitfensters verursachten Veränderungen des Helligkeitssignals für die Auswertung auf Eindringen eines Objekts (40) kompensiert werden.

8. Testverfahren nach Anspruch 7,
wobei das Integrationszeitfenster verlängert oder verkürzt wird.

9. Testverfahren nach Anspruch 7 oder 8,
wobei mindestens eine Lichtquelle (30) vorgesehen ist, die Licht innerhalb eines Blitzzeitfensters aussendet, und wobei zum Testen der Funktionsfähigkeit das Blitzzeitfenster gegenüber dem Integrationszeitfenster oder das Integrationszeitfenster gegenüber dem Blitzzeitfenster verschoben wird.

10. Testverfahren nach einem der Ansprüche 7 bis 9,
wobei der Lichtempfänger (23) ein zeilen- oder matrixförmiges Pixelbild liefert.

11. Testverfahren nach einem der Ansprüche 7 bis 10,
wobei bei Eindringen eines Objekts (40) in einen überwachten Bereich ein Warn-
oder Abschaltsignal ausgegeben wird.

## Claims

1. An optoelectronic monitoring device (10) for object detection with at least one light receiver (23), which is designed to receive light within an integration time window and to pass on a resulting brightness signal, wherein a control unit (50) is provided, which is designed to recognise an object (40) entering into a monitored region from the signal of the light receiver (23), **characterized in that** a testing unit of the monitoring device (10) is designed to verify the functional capability of the light receiver (23), **in that** the testing unit for the verification of the functional capability is further designed to vary the integration time window and to compare the change in the brightness signal with an expected change in the brightness signal and **in that** the control unit (50) is designed to compensate for the changes in the brightness signal by varying the integration time window.

2. A monitoring device (10) in accordance with claim 1, wherein the testing unit is designed to lengthen or to shorten the integration time window.

3. A monitoring device (10) in accordance with claim 1 or claim 2, wherein at least one light source (30) is provided, which is designed to emit light within a flash time window and where the testing unit is designed to shift the flash time window with respect to the integration time window or to shift the integration time window with respect to the flash time window.

4. A monitoring device (10) in accordance with any one of the preceding claims, wherein a plurality of light receivers (23) are combined in series or areally, in particular in a row or a matrix and consequently deliver a pixel image.

5. A monitoring device (10) in accordance with any one of the preceding claims, wherein the light receiver (23) is either a CCD sensor or a CMOS sensor.

6. A monitoring device (10) in accordance with any one of the preceding claims, wherein the control unit (50) is designed to emit either a warning signal or a switch-off signal on entry of an object (40) into the monitored region.

7. A testing method for an optoelectronic monitoring device (10) with at least one light receiver (23) which receives light within an integration time window and passes on a resulting brightness signal, wherein the entry of an object (40) into a monitored region is recognized from the signal of the light receiver (23), **characterized in that** the functional capability of the light receiver (23) is tested, that the integration time window is varied and a change in the brightness signal is compared to an expected change in the brightness signal and **in that** the changes in the brightness signal caused by variations of the integration time window during the testing of the functional capability are compensated for during the analysis of the entry of the object (40).

8. A testing method in accordance with claim 7, where the integration time window can be lengthened or shortened.

9. A testing method in accordance with claim 7 or claim 8, wherein at least one light source (30) is provided, which emits light within a flash time window and wherein for the testing of the functional capability, the flash time window is shifted with respect to the integration time window or the integration time window is shifted with respect to the flash time window.

10. A testing method in accordance with any one of the claims 7 to 9, wherein the light receiver (23) delivers a row shaped or a matrix shaped pixel image.

11. A testing method in accordance with any one of the claims 7 to 10, wherein upon entry of an object (40) into a monitored region a warning signal or a switch-off signal is emitted.

## Revendications

1. Dispositif de surveillance (10) optoélectronique pour l'enregistrement d'objet comprenant au moins un récepteur de lumière (23), qui est conçu pour recevoir de la lumière à l'intérieur d'une fenêtre temporelle d'intégration et délivrer un signal de luminosité résultant,
une commande (50) étant prévue, laquelle est conçue pour détecter la pénétration d'un objet (40) dans une zone surveillée à partir du signal du récepteur de lumière (23),
**caractérisé**
**en ce qu'**une unité de test du dispositif de surveillance (10) est conçue pour contrôler le bon fonctionnement du récepteur de lumière (23),
**en ce que** l'unité de test pour le contrôle du bon fonctionnement est conçue également pour modifier la fenêtre temporelle d'intégration et comparer une variation du signal de luminosité avec une variation escomptée du signal de luminosité, et en ce que la commande (50) est conçue pour compenser des variations du signal de luminosité qui sont provoquées par des variations de la fenêtre temporelle d'intégration.

2. Dispositif de surveillance (10) selon la revendication 1,
l'unité de test étant conçue pour allonger ou raccourcir la fenêtre temporelle d'intégration.

3. Dispositif de surveillance (10) selon la revendication 1 ou 2,
au moins une source lumineuse (30) étant prévue, laquelle est conçue pour émettre de la lumière à l'intérieur d'une fenêtre temporelle d'éclair,
et l'unité de test étant conçue pour décaler la fenêtre temporelle d'éclair par rapport à la fenêtre temporelle d'intégration ou la fenêtre temporelle d'intégration par rapport à la fenêtre temporelle d'éclair.

4. Dispositif de surveillance (10) selon l'une quelconque des revendications précédentes,
plusieurs récepteurs de lumière (23) étant regroupés en rangée ou en surface, en particulier sous forme de ligne ou de matrice, et fournissent ainsi une image de pixels.

5. Dispositif de surveillance (10) selon l'une quelconque des revendications précédentes,
le récepteur de lumière (23) étant un capteur CCD ou un capteur CMOS.

6. Dispositif de surveillance (10) selon l'une quelconque des revendications précédentes,
la commande (50) étant conçue pour délivrer un signal d'avertissement ou un signal de déconnexion en cas de pénétration d'un objet (40) dans une zone surveillée.

7. Procédé de test pour un dispositif de surveillance (10) optoélectronique comprenant au moins un récepteur de lumière (23), qui reçoit de la lumière à l'intérieur d'une fenêtre temporelle d'intégration et émet un signal de luminosité résultant,
la pénétration d'un objet (40) dans une zone surveillée étant détectée à partir du signal du récepteur de lumière (23),
**caractérisé**
**en ce que** le bon fonctionnement du récepteur de lumière (23) est testé, en ce que la fenêtre temporelle d'intégration est modifiée et une variation du signal de luminosité est comparée avec une variation escomptée du signal de luminosité, et en ce que les variations du signal de luminosité, provoquées pendant le test du bon fonctionnement par des variations de la fenêtre temporelle d'intégration, sont compensées pour l'analyse de la pénétration d'un objet (40).

8. Procédé de test selon la revendication 7,
la fenêtre temporelle d'intégration étant allongée ou raccourcie.

9. Procédé de test selon la revendication 7 ou 8,
au moins une source lumineuse (30) étant prévue, laquelle émet de la lumière à l'intérieur d'une fenêtre temporelle d'éclair, et la fenêtre temporelle d'éclair étant décalée pour le test du bon fonctionnement par rapport à la fenêtre temporelle d'intégration ou bien la fenêtre temporelle d'intégration étant décalée par rapport à la fenêtre temporelle d'éclair.

10. Procédé de test selon l'une des revendications 7 à 9,
le récepteur de lumière (23) fournissant une image de pixels sous forme de ligne ou de matrice.

11. Procédé de test selon l'une des revendications 7 à 10,
un signal d'avertissement ou un signal de déconnexion étant émis en cas de pénétration d'un objet (40) dans une zone surveillée.
